# EUROPÄISCHE PATENTSCHRIFT

(11) **EP 3 105 106 B1**
(45) Veröffentlichungstag und Bekanntmachung des Hinweises auf die Patenterteilung: **12.09.2018**
(21) Anmeldenummer: 15703975.1
(22) Anmeldetag: 10.02.2015
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 11.02.2014 DE 102014101631
(43) Veröffentlichungstag der Anmeldung: 21.12.2016
(73) Patentinhaber: ThyssenKrupp Presta AG, 9492 Eschen (LI); thyssenkrupp AG, 45143 Essen (DE)
(72) Erfinder: HUBER, Sebastian, A-6811 Göfis (AT)
(74) Vertreter: thyssenkrupp Intellectual Property GmbH
(86) Internationale Anmeldenummer: PCT/EP2015/052740
(87) Internationale Veröffentlichungsnummer: WO 2015/121245

(56) Entgegenhaltungen:
- EP-A1- 0 849 141
- EP-A2- 2 307 259
- US-A- 3 703 106
- US-A1- 2004 000 781

## Beschreibung

### Technisches Gebiet

Die vorliegende Erfindung betrifft eine Lenksäule für ein Kraftfahrzeug mit einer mit dem Chassis des Kraftfahrzeugs verbindbaren Trageinheit und einer an der Trageinheit gehaltenen Stelleinheit, welche eine Lenkspindel lagert, die zum Einleiten einer Lenkbewegung von einem Lenkrad in ein Lenksystem zur Übertragung der Lenkbewegung auf ein lenkbares Rad dient, wobei die Stelleinheit im Crashfall gegenüber der Trageinheit verschiebbar ist, um Energie zu absorbieren.

### Stand der Technik

Lenksäulen in Kraftfahrzeugen sind bekannt, bei welchen eine mit dem Chassis des Kraftfahrzeugs verbindbare Trageinheit, beispielsweise in Form von Konsolenteilen, vorgesehen ist, und eine an der Trageinheit gehaltene Stelleinheit, welche beispielsweise ein Mantelrohr umfasst, vorgesehen ist, wobei in der Stelleinheit eine Lenkspindel drehbar gelagert ist. Die Stelleinheit ist dabei gegenüber der Trageinheit verschiebbar angeordnet, um im Crashfall durch eine entsprechende Verschiebung der Stelleinheit gegenüber der mit dem Chassis verbundenen Trageinheit eine Nachgiebigkeit des Lenkrades bereitzustellen, um das Crashverhalten zu verbessern. Bei der Verschiebung der Stelleinheit gegenüber der Trageinheit wird über eine Energieabsorptionsvorrichtung Crashenergie absorbiert, wobei hier unterschiedliche Ausgestaltungen bekannt sind, über welche Crashenergie über den Verschiebungsweg der Stelleinheit gegenüber der Trageinheit hinweg kontrolliert absorbiert werden kann.

Beispielsweise ist aus der DE 10 2005 052 123 B3 eine Lenksäule bekannt, bei welcher zwischen der Trageinheit und der Stelleinheit ein an der Stelleinheit festgelegtes Energieabsorptionsteil vorgesehen ist, welches ein Langloch aufweist. In dem Langloch ist ein an einer Schiene festgelegter und Verbreiterungen aufweisender Bolzen geführt, welcher im Normalbetrieb über ein Feststellelement an der Trageinheit festgelegt ist. Im Crashfall kann so eine Bewegung des Bolzens in dem Langloch stattfinden, wobei aufgrund der Verbreiterungen des Bolzens eine Verformung des Energieabsorptionsteils und insbesondere des Langlochs des Energieabsorptionsteils so stattfindet, dass eine kontrollierte Energieabsorption über den Verschiebungsweg hinweg erreicht wird.

In der DE 10 2008 034 807 B3 wird ein alternatives Konzept verfolgt, wobei hier ebenfalls eine Stelleinheit gegenüber einer Trageinheit verschiebbar angeordnet ist, wobei sich die Stelleinheit und die Trageinheit im Normalbetrieb nicht gegeneinander verschieben, im Crashfall jedoch eine Verschiebung der Stelleinheit gegenüber der Trageinheit zur Energieabsorption vorgesehen ist. Zwischen einem Eingriffsteil, welches im Normalbetrieb an der Trageinheit festgelegt ist, und einer Schiene, welche an der Stelleinheit festgelegt ist, ist ein Biegestreifen vorgesehen, welcher derart ausgestaltet ist, dass er im Crashfall bei einer Verschiebung der Stelleinheit gegenüber der Trageinheit auf definierte Weise durch seine Verformung Energie absorbiert.

Bei den vorbeschriebenen Lenksäulen für Kraftfahrzeuge handelt es sich um Lenksäulen, welche zur Anpassung der Position des Lenkrades an die Sitzposition des Fahrers verstellbar sind, wobei hier zumindest eine Längenausrichtung durch eine Verschiebung der Stelleinheit gegenüber der Trageinheit durchgeführt werden kann. Die nach einem entsprechenden Verstellvorgang erreichte Position der Stelleinheit relativ zur Trageinheit wird durch einen entsprechenden Arretiermechanismus so festgestellt, dass im Normalbetrieb die eingestellte Position der Stelleinheit gegenüber der Trageinheit festgestellt ist. Hierzu wird beispielsweise ein Spannmechanismus vorgeschlagen, welcher über einen Spannbolzen und mindestens ein Arretierelement auf die als Feststellelement dienende Schiene wirkt, so dass das Feststellelement im Normalbetrieb in Längsrichtung der Lenksäule unverschiebbar gegenüber der Stelleinheit gehalten ist. Im Crashfall ist es gegenüber der Stelleinheit unter Energieabsorption, unter Anwendung der oben exemplarisch ausgeführten Energieabsorptionsmechanismen verschiebbar.

Über die Energieabsorptionsmechanismen, also beispielsweise die Verformung des Langlochs des Energieabsorptionsteils beziehungsweise der Verformung des Biegedrahts oder Biegestreifens kann entsprechend ein vorgegebenes Kraft-Weg Verhalten für die Energieabsorption der Crashenergie über den Verschiebungsweg für den Crashfall vorgegeben sein, da die Relativverschiebung zwischen der Trageinheit und der Stelleinheit stets die gleiche sein kann und durch die Längsverstellung der Lenksäule nicht verändert ist.

Die beschriebenen Energieabsorptionsmechanismen benötigen für ihren Aufbau jeweils mindestens drei Teile in Form eines Eingriffsteils, einer Schiene und dem Bolzen beziehungsweise dem Biegestreifen.

Aus der US 2004/000781 A1 ist eine Lenksäule mit einer Energieabsorptionseinrichtung gemäß der Präambel des Anspruchs 1 bekannt,
die eine an der Stelleinheit festgelegte erste Gleitschiene und eine an der Trageinheit festgelegte zweite Gleitschiene aufweist, welche aneinander geführt sind, und die ein zusätzliches, zwischen Stelleinheit und Trageinheit angeordnetes Energieabsorptionselement aufweist. Die Gleitschienen dienen ausschließlich zur axialen Führung im Crashfall, und zur kontrollierten Einleitung der Energie in das Energieabsorptionselement. Diese Anordnung ist zuverlässig, jedoch aufwendig im Aufbau und in der Herstellung.

Die EP 0 849 141 A1 zeigt eine Energieabsorptionsvorrichtung, bei der im Crashfall kinetische Energie durch Reibung eines an einer Gleitschiene entlangbewegten Gleitsteins absorbiert wird. Die zur Energieabsorption nutzbare Reibungskraft ist bei einer derartigen bekannten Anordnung jedoch nicht hinreichend beherrschbar, so dass eine vorhersehbare und reproduzierbare Wirkung zur Energieabsorption praktisch nicht darstellbar ist.

### Darstellung der Erfindung

Ausgehend von dem bekannten Stand der Technik ist es eine Aufgabe der vorliegenden Erfindung, eine Lenksäule für ein Kraftfahrzeug anzugeben, welche einen vereinfachten Aufbau aufweist.

Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.

Entsprechend wird eine Lenksäule für ein Kraftfahrzeug vorgeschlagen, umfassend eine mit dem Chassis des Kraftfahrzeugs verbindbare Trageinheit und eine an dieser gehaltene Stelleinheit, welche eine Lenkspindel lagert, die zum Einleiten einer Lenkbewegung von einem Lenkrad in ein Lenksystem zur Übertragung der Lenkbewegung auf ein lenkbares Rad dient, wobei die Stelleinheit im Crashfall gegenüber der Trageinheit verschiebbar ist, und wobei eine Energieabsorptionseinrichtung zwischen der Trageinheit und der Stelleinheit angeordnet ist, um Energie im Crashfall über den Verschiebungsweg hinweg zu absorbieren, wobei die Energieabsorptionseinrichtung eine an der Stelleinheit festgelegte erste Gleitschiene und eine an der Trageinheit festgelegte zweite Gleitschiene aufweist,, wobei die erste Gleitschiene einen C-förmigen Querschnitt aufweist und die zweite Gleitschiene einen C-förmigen Querschnitt aufweist, und eine Gleitschiene in der anderen Gleitschiene geführt ist, wobei ein Kontakt zwischen den Gleitschienen dargestellt ist und welche im Crashfall zur Energieabsorption durch Reibung gegeneinander verschiebbar sind.

Insbesondere kann die Lenkspindel die Lenkbewegung von dem Lenkrad auf das lenkbare Rad unter Zwischenschaltung eines Lenkgetriebes übertragen.

Es ist aber auch denkbar und möglich, dass die Lenkbewegung von der Lenkspindel sensorisch, beispielsweise elektrisch, elektronisch oder magnetisch, abgetastet wird und in eine Steuerung eingespeist wird, die über eine Einrichtung eine Verschwenkung des lenkbaren Rades zur Darstellung der Lenkbewegung ausführt. Derartige Systeme sind als Steer-by-wire bekannt.

Dadurch, dass eine erste Gleitschiene und eine zweite Gleitschiene vorgesehen sind, welche im Crashfall unter Energieabsorption gegeneinander verschiebbar sind, kann eine weitere Vereinfachung gegenüber den aus dem Stand der Technik bekannten Energieabsorptionsmechanismen erreicht werden. Insbesondere kann durch die Bereitstellung der beiden, aneinander geführten Gleitschienen erreicht werden, dass eine zuverlässige Energieabsorption aufgrund der zwischen den beiden Gleitschienen vorliegenden Hemmung, die beispielsweise durch Reibung und/oder Verformung erreicht werden kann.

Erfindungsgemäß weist die erste Gleitschiene einen C-förmigen Querschnitt auf, wobei die zweite Gleitschiene in der ersten Gleitschiene geführt ist. Erfindungsgemäß weist die zweite Gleitschiene ebenfalls einen C-förmigen Querschnitt auf, und eine Gleitschiene ist in der anderen Gleitschiene geführt. Der C-förmige Querschnitt weist dabei zwei Seitenwände und einen Basisbereich oder ein Basisteil auf. Das Basisteil verbindet die beiden Seitenwände miteinander, so dass die C-Form im Querschnitt gebildet ist. Auf diese Weise kann zumindest im Bereich der Seitenwände des C-förmigen Profils auf einfache Weise ein Kontakt zwischen den Gleitschienen derart dargestellt werden, dass eine Energieabsorption bereitgestellt wird.

Bei einer einen C-förmigen Querschnitt aufweisenden Gleitschiene können die beiden Gleitschienen entweder mit ihren jeweiligen Seitenwänden gegenläufig miteinander verbunden sein, derart, dass die jeweiligen Basisteile außen liegen und sich die beiden Gleitschienen entsprechend im Wesentlichen nur im Bereich der Seitenwände berühren, oder aber die beiden Gleitschienen können gleichsinnig ineinander eingelegt sein, derart, dass sowohl die Basen als auch die Seitenwände einander berühren.

Bevorzugt ist eine Gleitschiene an der anderen Gleitschiene formschlüssig und nur in Schienenrichtung verschiebbar gehalten, wobei mindestens eine Gleitschiene besonders bevorzugt einen Hinterschnitt zum Halten der anderen Gleitschiene aufweist. Auf diese Weise sind die beiden Gleitschienen unverlierbar aneinander angebunden und es wird erreicht, dass auch bei einer Verstellung einer verstellbaren Lenksäule die beiden Gleitschienen in ihrer vorgesehenen Verbindung verbleiben.

Um neben einer Energieabsorption durch Reibung auch eine Energieabsorption durch Verformung bereit zu stellen weist vorteilhaft mindestens eine Gleitschiene einen entlang der Gleitschiene veränderlichen Querschnitt auf, um bei einer Verschiebung der Gleitschienen gegeneinander eine Verformung mindestens einer der Gleitschienen zu bewirken. Durch die auf diese Weise bei der Verschiebung der Gleitschienen bewirkten Verformung wird Energie bei einer Verschiebung der beiden Gleitschienen gegeneinander, wie sie im Crashfall auftritt, Energie absorbiert.

Der veränderliche Querschnitt kann besonders bevorzugt dadurch dargestellt werden, dass mindestens eine Gleitschiene einen Keilwinkel entlang der Gleitschiene aufweist. Durch den Keilwinkel wird bei einer Verschiebung der Gleitschienen gegeneinander eine Keilwirkung zwischen den Gleitschienen erzeugt, welche in einer Verformung mindestens einer der Gleitschienen resultiert. Durch die Verformung wird entsprechend Energie absorbiert.

Eine besonders vorteilhafte Kombination aus hoher Reibung und Keilwirkung wird erreicht, wenn beide Gleitschienen einen identischen Keilwinkel aufweisen. Damit liegen die Gleitschienen in den Kontaktbereichen im Wesentlichen vollflächig aneinander an, so dass zuverlässig eine hohe Reibung erzeugt wird, und ermöglichen weiterhin eine Verformung mindestens einer der Gleitschienen über den ganzen Kontaktbereich zwischen den Gleitschienen hinweg.

Der Keilwinkel, unter welchem eine Verjüngung der Gleitschiene beziehungsweise eine Erweiterung der Gleitschiene in die Verschiebungsrichtung im Crashfall ausgebildet ist, kann mit dem jeweils gewünschten Verschiebungsweg-Kraft Verhalten abgeglichen werden, so dass ein für die jeweilige Anwendung optimales Verschiebungsweg-Kraft-Verhalten beziehungsweise Energieabsorptionsverhalten der Lenksäule erreicht werden kann.

Eine besonders einfach und wirtschaftlich herzustellende Energieabsorptionsvorrichtung wird erreicht, wenn die erste Gleitschiene und/oder die zweite Gleitschiene als einstückiges Blechformteil ausgebildet sind. Beide Gleitschienen können als gebogene Blechstreifen vorgesehen sein. In einer Alternative kann auch eine der Gleitschienen als Sinterteil ausgebildet sein. Diese Gleitschiene, die als Sinterteil ausgebildet ist, ist dann bevorzugt nicht als C-Profil, sondern als Vollprofil ausgebildet und in der anderen, bevorzugt C-förmigen, Gleitschiene geführt.

Die Lenksäule kann besonders bevorzugt als verstellbare Lenksäule ausgebildet sein, bei welcher die Stelleinheit gegenüber der Trageinheit im Normalbetrieb in ihrer Position verstellbar ist. Um dies zu erreichen kann die zweite Gleitschiene über einen Spannmechanismus an der Trageinheit festlegbar sein, um in einem geöffneten Zustand des Spannmechanismus eine Längsverstellung der Stelleinheit gegenüber der Trageinheit zu ermöglichen, und in einer Verriegelungsposition des Spannmechanismus eine Verschiebung der Stelleinheit gegenüber der Trageinheit im Normalbetrieb zu verhindern.

Eine sichere und wirtschaftlich herstellbare Verbindung der ersten Gleitschiene am Mantelrohr kann dadurch erreicht werden, dass die erste Gleitschiene am Mantelrohr der Stelleinheit nicht lösbar und formschlüssig verbunden ist, bevorzugt mittels Durchsetzfügen verbunden ist. Hierdurch wird zum einen ein materialschonendes Befestigen der Gleitschiene an dem Mantelrohr der Stelleinheit erreicht, und zum anderen kann durch das Durchsetzfügen ein kostengünstiges Befestigen erreicht werden, welches auf Schweißvorgänge verzichtet.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Seitenansicht auf eine verstellbare Lenksäule in einem ersten Ausführungsbeispiel;
- Figur 2: eine schematische perspektivische Ansicht von unten auf die verstellbare Lenksäule der Figur 1;
- Figur 3: eine perspektivische Ansicht auf einige Komponenten der verstellbaren Lenksäule der vorstehenden Figuren;
- Figur 4: eine schematische Schnittdarstellung durch die verstellbare Lenksäule der vorstehenden Figuren, geschnitten entlang der Linie A-A, in einer verriegelten Stellung;
- Figur 5: die Schnittdarstellung der Figur 4, aber in einer geöffneten Stellung der verstellbaren Lenksäule, in welcher eine Längenverstellung ermöglicht wird;
- Figur 6: eine schematische perspektivische Darstellung eines Arretierelementes der Lenksäule;
- Figur 7: eine schematische Seitenansicht auf die Stelleinheit der vorstehenden Figuren mit einer ersten und einer zweiten Gleitschiene;
- Figur 8: eine schematische Schnittdarstellung durch die Stelleinheit aus Figur 7;
- Figur 9: eine schematische perspektivische Darstellung einer einen Keilwinkel aufweisenden Gleitschiene;
- Figur 10: eine schematische Seitenansicht auf eine Stelleinheit mit einer an der Stelleinheit festgelegten Gleitschiene in einer weiteren Ausführungsform;
- Figur 11: eine schematische Seitenansicht auf eine Stelleinheit in einer weiteren Ausführungsform;
- Figur 12: eine schematische perspektivische Darstellung einer weiteren Lenksäule, welche keine Längenverstellung bereitstellt; und
- Figur 13: Darstellung einer alternativen Form der zweiten Gleitschiene.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

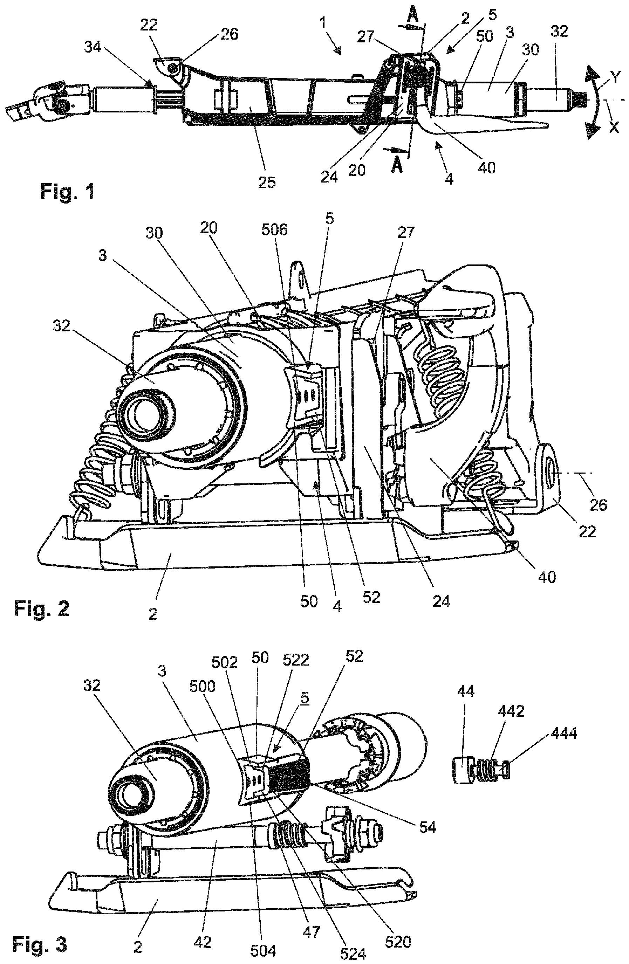

In den Figuren 1 bis 9 sind unterschiedliche Darstellungen, unterschiedliche Zustände und unterschiedliche Komponenten einer verstellbaren Lenksäule 1 in einem ersten Ausführungsbeispiel gezeigt. Die nachfolgende Beschreibung bezieht sich zunächst auf dieses Ausführungsbeispiel.

Die Lenksäule 1 umfasst eine Trageinheit 2, welche mit dem Chassis des jeweiligen Kraftfahrzeugs verbindbar ist. Die Trageinheit 2 weist in dem gezeigten Ausführungsbeispiel ein erstes Konsolenteil 20 und ein zweites Konsolenteil 22 auf, welche miteinander verbunden sind und über welche die Trageinheit 2 an dem Chassis des Kraftfahrzeugs angebunden werden kann.

Eine Stelleinheit 3 ist vorgesehen, welche ein Mantelrohr 30 aufweist, und welche eine Lenkspindel 32 drehbar gelagert aufnimmt. Mittels der Lenkspindel 32, welche sich entlang ihrer Lenkspindelachse X erstreckt, kann ein von einem Fahrer über ein an der Lenkspindel 32 montiertes Lenkrad (hier nicht dargestellt) als Lenkbefehl eingebrachtes Drehmoment an ein hier nicht gezeigtes Lenkritzel übertragen werden, welches mit einer hier ebenfalls nicht gezeigten Zahnstange kämmt, die dann ihrerseits den vorgegebenen Lenkwinkel über Spurstangen auf die lenkbaren Räder des Kraftfahrzeugs überträgt.

Die Trageinheit umfasst weiterhin Seitenwangen 24, welche mit dem hinteren Konsolenteil 20 verbunden ist und zwischen welchen die Stelleinheit 3 verschiebbar gehalten ist. Weiterhin ist zur Übertragung des Drehmoments von der Lenkspindel 32 auf die nachgelagerten Komponenten in den unterschiedlichen Positionen ein Teleskopmechanismus 34 vorgesehen, der eine Verschiebbarkeit der Stelleinheit 3 gegenüber der Trageinheit 2 bei gleichzeitiger Übertragung des Drehmoments ermöglicht. Die Stelleinheit 3 ist in dem gezeigten Ausführungsbeispiel entsprechend entlang der Lenkspindelachse X verschiebbar in der Trageinheit 2 gehalten.

Die Stelleinheit 3 kann gegenüber der Trageinheit 2 zur Anpassung der Position des Lenkrades an die Sitzposition des jeweiligen Fahrers des Kraftfahrzeugs entlang der Lenkspindelachse X verschoben werden. Auf diese Weise kann die Ergonomie für den Fahrer verbessert werden und daher die Sicherheit beim Fahren des Kraftfahrzeugs erhöht werden.

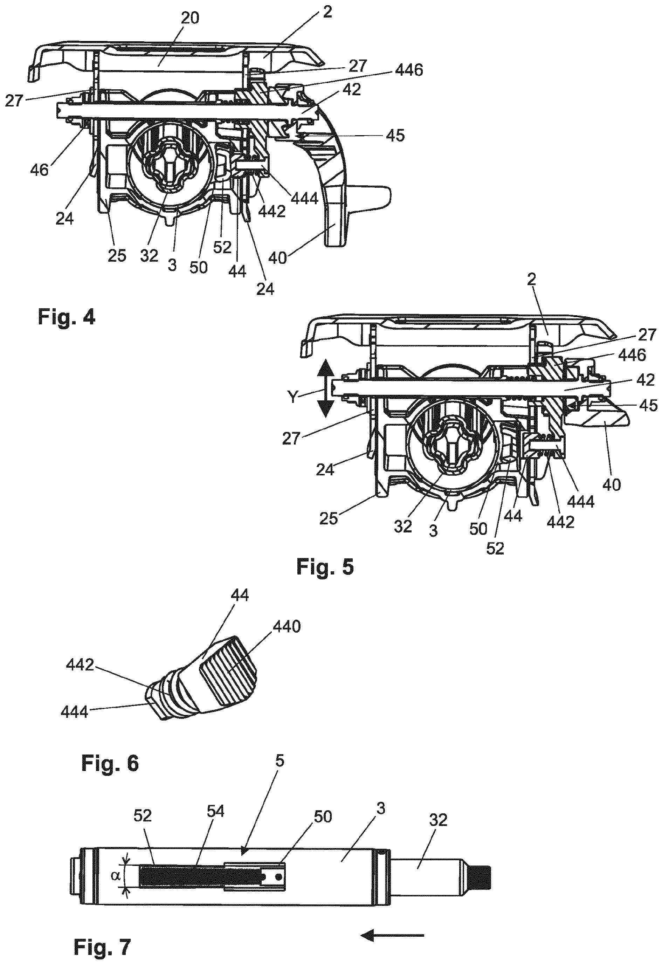

Die vom Fahrer eingestellte Position des Lenkrads und damit die Position der Stelleinheit 3 gegenüber der Trageinheit 2 wird über einen Spannmechanismus 4 verriegelt. Der Spannmechanismus 4 umfasst unter anderem ein Drucklager 46, einen Nockenmechanismus 45, bestehend aus einem Nocken der gegenüber einem Gegenocken verdrehbar ist und einen Spannhebel 40, mittels welchem der Spannmechanismus 4 die Nocken des Nockenmechanismus 45 gegeneinander verdreht werden können, wodurch der Spannmechanismus betätigt werden kann. Die Spannachse 42 durchdringt Öffnungen 27 in den Seitenwangen 24 des hinteren Konsolenteils 20. Beim Spannen des Spannmechanismus 4 werden die Seitenwangen 24 mit der Stelleinheit 3 verpresst, so dass eine Fixierung erreicht ist. In einer geöffneten Stellung des Spannhebels 40, die beispielsweise in Figur 5 gezeigt ist, ist der Spannmechanismus 4 geöffnet, um die Positionsverstellung der Stelleinheit 3 gegenüber der Trageinheit 2 entlang der Lenkspindelachse X durchführen zu können. Nach Auffinden der gewünschten Position wird der Spannhebel 40 dann in die Verriegelungsposition bewegt, welche beispielsweise in Figur 4 zu erkennen ist. In einer Verriegelungsposition des Spannhebels 40 ist die Position der Stelleinheit 3 bezüglich der Trageinheit 2 im Normalbetrieb des Kraftfahrzeuges entsprechend unveränderlich, so dass ein komfortabler und sicherer Betrieb des Kraftfahrzeugs ermöglicht ist. Insbesondere ist der Spannmechanismus 4 so ausgelegt, dass sich im Normalbetrieb bei verriegeltem Spannmechanismus 4 die Stelleinheit 3 gegenüber der Trageinheit 2 auch dann nicht verschiebt, wenn sich ein Fahrer beispielsweise zum Einsteigen in das Kraftfahrzeug oder zum Aussteigen aus dem Kraftfahrzeug am Lenkrad abstützt oder daran zieht.

Im hier gezeigten Ausführungsbeispiel ist neben der Verschiebbarkeit entlang der Lenkspindelachse X auch eine Höhenverstellung für die Lenkspindel 32 entlang der Höhenrichtung Y vorgesehen. Dazu ist ein Schwenkhebel 25 vorgesehen, der die Stelleinheit 3 aufnimmt und um eine Schwenkachse 26 schwenkbar an dem vorderen Konsolenteil 22 fixiert ist. In den Seitenwangen 24 des hinteren Konsolenteils 20 sind Langlöcher 27 vorgesehen, die von der Spannachse durchdrungen sind, und eine Bewegung der Spannachse bei geöffnetem Spannsystem in Höhenrichtung Y ermöglichen. Beim Schließen des Spannmechanismus 4 werden die Seitenwangen 24 gegen den Schwenkhebel 25, und der Schwenkhebel 25 gegen die Stelleinheit 3 verpresset, so dass die Bewegung in Richtung der Lenkspindelachse X (= der Längsrichtung) und in Höhenrichtung Y blockiert ist. Vergleichbare Spannsysteme sind im Stand der Technik, beispielsweise in der eingangs genannten DE 10 2005 052 123 B3, bekannt.

Um im Crashfall ein Verschieben der Stelleinheit 3 gegenüber der Trageinheit 2 in Richtung der Lenkspindelachse X zu erlauben und gleichzeitig ein kontrolliertes Absorbieren von Energie zu ermöglichen, ist eine Energieabsorptionseinrichtung 5 zwischen Trageinheit 2 und Stelleinheit 3 vorgesehen, mittels welcher ein über den Verschiebeweg hinweg vorgegebener Abbau von Crashenergie erreicht werden kann. Dies ist im Crashfall insbesondere dann von Bedeutung, wenn die Energieabsorptionswirkung eines im Lenkrad angeordneten Airbags bereits aufgezehrt ist und der Fahrer dann auf das Lenkrad auftrifft. Durch das kontrollierte Zurückweichen des Lenkrads über den Verschiebeweg hinweg kann so weitere Crashenergie abgebaut werden.

Die Energieabsorptionseinrichtung 5 weist eine erste Gleitschiene 50 auf, die an der Stelleinheit 34 festgelegt ist. Weiterhin ist eine zweite Gleitschiene 52 vorgesehen, die bezüglich der Trageinheit 2 festgelegt ist. Die erste Gleitschiene 50 und die zweite Gleitschiene 52 sind, wie beispielsweise in Figur 2 gezeigt, in Schienenrichtung verschiebbar aneinander geführt. In dem gezeigten Ausführungsbeispiel ist die zweite Gleitschiene 52 in der ersten Gleitschiene 50 so geführt, dass sich die beiden Gleitschienen 50, 52 im Crashfall gegeneinander verschieben lassen. Durch die Ausrichtung der beiden Gleitschienen 50, 52 in Richtung der Lenkspindelachse X lässt sich entsprechend auch die Stelleinheit 3 gegenüber der Trageinheit 2 im Crashfall verschieben, wobei sich die beiden Gleitschienen 50, 52 dann gegeneinander verschieben.

Die erste Gleitschiene 50 und die zweite Gleitschiene 52 sind direkt miteinander verbunden und stellen durch sich die Energieabsorption bereit. Weitere Teile, wie sie aus dem Stand der Technik bekannt sind, sind zum Aufbau der vorgeschlagenen Energieabsorptionsvorrichtung 5 nicht notwendig. Die Energieabsorption findet vielmehr, wie nachfolgend beschrieben, lediglich durch die beiden aneinander geführten Gleitschienen 50, 52 statt.

Die erste Gleitschiene 50 ist an der Stelleinheit 3 durch eine nicht lösbare Verbindung, beispielsweise mittels Verschweißen, Nieten oder besonders bevorzugt mittels Durchsetzfügen verbunden. Damit ist die erste Gleitschiene 50 nicht lösbar an der Stelleinheit 3 festgelegt.

Die zweite Gleitschiene 52 ist in dem gezeigten Ausführungsbeispiel über den Spannmechanismus 4 in der Verriegelungsposition des Spannhebels 40 an der Trageinheit 2 festgelegt. In der geöffneten Position des Spannhebels 40 hingegen ist die zweite Gleitschiene 52 nicht an der Trageinheit 2 festgelegt, sondern gegenüber dieser verschiebbar.

Um dies zu erreichen, ist, wie beispielsweise in Figur 3 zu erkennen, die zweite Gleitschiene 52 mit einer Verzahnung 54 versehen, welche es dem Spannmechanismus 4 über einen nachfolgend beschriebenen Mechanismus ermöglicht, die zweite Gleitschiene 52 bezüglich der Trageinheit 2 festzulegen, um auf diese Weise im Normalbetrieb die Stelleinheit 3 bezüglich der Trageinheit 2 in ihrer vom Fahrer gewählten Position zu halten.

Der Spannmechanismus 4 weist dabei den Spannhebel 40 auf, welcher auf eine Spannachse 42 wirkt, die ihrerseits ein Arretierelement 44 zwischen einer Verriegelungsstellung und einer geöffneten Stellung bewegen kann. Das Arretierelement 44 weist eine Verzahnung 440 auf, welche in die Verzahnung 54 der zweiten Gleitschiene 52 eingreifen kann.

In der geöffneten Stellung des Spannhebels 40 ist die Verzahnung 440 des Arretierelements 44 aus der Verzahnung 54 der zweiten Gleitschiene 52 herausgehoben, so wie es beispielsweise in Figur 5 dargestellt ist. In dieser geöffneten Stellung kann die zweite Gleitschiene 52 entsprechend gegenüber der Trageinheit 2 verschoben werden, um eine Verstellung der Position der Stelleinheit 3 gegenüber der Trageinheit 2 zu ermöglichen. Beim Öffnen des Spannmechanismus 4 durch eine entsprechende Betätigung des Spannhebels 40 wird die Spannachse 42 und das über das Übertragungselement 446 damit verbundene Arretierelement 44 dabei zuverlässig durch eine Rückstellfeder 47 in die geöffnete Position gebracht, so dass eine Verstellung der Stelleinheit 3 gegenüber der Trageinheit 2 komfortabel und ohne Verhaken möglich ist. Mittels eines Bolzens 444 ist das Arretierelement 44 über ein Übertragungselement 446 mit der Spannachse 42 derart verbunden, dass die über den Spannhebel 40 aufgebrachte Bewegung auf das Arretierelement 44 übertragen werden kann.

In der Verriegelungsstellung des Spannhebels 40 greift das Arretierelement 44 mit seiner Verzahnung 440 in die Verzahnung 54 der zweiten Gleitschiene 52 so ein, dass die zweite Gleitschiene 52 gegenüber der Trageinheit 2 festgelegt ist. Diese Situation ist beispielsweise in Figur 4 gezeigt. Durch das Anpressen des Arretierelements 44 an die zweite Gleitschiene 52 wird diese weiterhin derart gegen die erste Gleitschiene 50 gepresst, dass eine Verschiebung der ersten Gleitschiene 50 gegenüber der zweiten Gleitschiene 52 und damit der Stelleinheit 3 gegenüber der Trageinheit 2 im Normalbetrieb nicht stattfinden kann. Mit der Vorspannfeder 442 wird das Arretierelement 44 in Richtung des Verzahnungseingriffs vorgespannt, so dass ein sicherer Verzahnungseingriff, spätestens nach einem kleinen Verschiebeweg, gewährleistet ist.

Auf diese Weise kann eine Positionsverstellung der Stelleinheit 3 gegenüber der Trageinheit 2 entlang der Lenkspindelachse X und in der Höhenrichtung Y bei geöffnetem Spannhebel 40 ermöglicht werden, und bei verriegeltem Spannhebel 40 wird die Stelleinheit 3 gegenüber der Trageinheit 2 dadurch arretiert, dass das Arretierelement 44 mit seiner Verzahnung 440 in die Verzahnung 54 der zweiten Gleitschiene 52 eingreift, und diese damit mit der Trageinheit 2 festlegt.

Die erste Gleitschiene 50 und die zweite Gleitschiene 52 sind so miteinander verbunden, dass sie im Normalbetrieb nicht gegeneinander verschoben werden können. Dies kann beispielsweise durch die Bereitstellung einer entsprechenden Reibung in Kombination mit einer angemessenen Anpresskraft zwischen der ersten Gleitschiene 50 und der zweiten Gleitschiene 52 erreicht werden. Um dies zu erreichen, können die Gleitschienen bevorzugt die nachfolgend beschriebene Geometrie aufweisen.

Die erste Gleitschiene 50 weist, wie beispielsweise in den Figuren 2 und 3 gezeigt, im Wesentlichen einen C-förmigen Querschnitt auf. Insbesondere ist eine Basis 500 vorgesehen, an welche sich an beiden Seiten Seitenwände 502, 504 anschließen. Die Basis 500 und die beiden Seitenwände 502, 504 ergeben im Querschnitt ein im Wesentlichen C-förmiges Profil. Die beiden Seitenwände 502, 504 stehen bevorzugt nicht parallel zueinander, sondern sind im gezeigten Ausführungsbeispiel unter einem Winkel ≠ 180° zueinander angeordnet, um auf diese Weise einen Hinterschnitt auszubilden, in welchem die zweite Gleitschiene 52 gehalten werden kann.

Die zweite Gleitschiene 52 weist ebenfalls eine Basis 520 sowie Seitenwände 522, 524 auf, so dass auch die zweite Gleitschiene 52 im Wesentlichen einen C-förmigen Querschnitt ausbildet.

Die erste Gleitschiene 50 und die zweite Gleitschiene 52 sind so ineinander geführt, dass sie sich unter Aufbringung einer vorgegebenen Kraft entlang der Schienenrichtung gegeneinander verschieben können. Da die erste Gleitschiene 50 mit dem durch die nicht-parallelen Seitenwände 502, 504 ausgebildeten Hinterschnitt ausgestaltet ist, weist auch die zweite Gleitschiene 52 bevorzugt nicht-parallele Seitenwände 522, 524 auf, welche so ausgebildet sind, dass sie an den Seitenwänden 502, 504 der ersten Gleitschiene 50 im Wesentlichen vollflächig anliegen. Durch den auf diese Weise ausgebildeten Hinterschnitt wird die zweite Gleitschiene 52 an der ersten Gleitschiene 50 gehalten und die beiden Schienen sind nur in Richtung der Erstreckung der Schienen gegeneinander verschiebbar.

Andere Möglichkeiten eines Formschlusses zwischen der ersten Gleitschiene 50 und der zweiten Gleitschiene 52 sind ebenfalls denkbar, beispielsweise durch die Bereitstellung einer Nut an einer Gleitschiene und eines entsprechenden, in der Nut geführten Vorsprungs in der anderen Gleitschiene. Es ist hier von Vorteil, die beiden Gleitschienen so aneinander zu führen, dass sie sich zwar in Schienenrichtung gegeneinander verschieben können, aber dabei miteinander verbunden bleiben.

Die erste Gleitschiene 50 mit ihrem C-förmigen Querschnitt und die zweite Gleitschiene 52 mit ihrem C-förmigen Querschnitt sind gegensinnig ineinander eingesetzt, derart, dass sich im Wesentlichen nur die Seitenwände 502, 504 sowie 522, 524 berühren. Die Basis 500 der ersten Gleitschiene 50 und die Basis 520 der zweiten Gleitschiene 52 berühren sich hingegen nicht.

Die erste Gleitschiene 50 und die zweite Gleitschiene 52 sind bevorzugt so ausgestaltet, dass sie bereits eine relativ hohe Reibung gegeneinander aufweisen, dass eine Festlegung der Stelleinheit 3 gegenüber der Trageinheit 2 im Normalbetrieb kann bereits durch die Festlegung der zweiten Gleitschiene 52 an der Trageinheit 2 über das Arretierelement 44 genügen, um die Position der Stelleinheit 3 gegenüber der Trageinheit 2 zuverlässig zu halten. Durch das Anpressen der zweiten Gleitschiene 52 auf die erste Gleitschiene 50 über den Spannmechanismus 4 wird die Haftreibung weiter erhöht, so dass auch über die Einstellung des Anpressdruckes hier ein entsprechendes Arretieren der Gleitschienen 50, 52 gegeneinander erreicht werden kann. Bei der in Fig. 1 bis Fig. 5 veranschaulichten Lenksäule 1 wird die Hauptfixierkraft, zur Sicherung der Position der Stelleinheit 3 gegenüber der Trageinheit 2 im verriegelten Zustand des Spannmechanismus 4, durch die Reibung zwischen Seitenwänden der Trageinheit 2 und der Stelleinheit 3 aufgebracht.

Die Energieabsorption im Crashfall wird durch die Reibung der Gleitschienen 50, 52 aneinander erreicht, wenn die beiden Gleitschienen über ihre Längserstreckung hinweg einen konstanten Querschnitt aufweisen und die Seitenwände 502, 504 der ersten Gleitschiene 50 jeweils parallel zu den Seitenwänden 522, 524 der zweiten Gleitschiene 52 ausgerichtet sind. Die Oberflächen der Seitenwände 502, 504, 522, 524 können entsprechend so behandelt sein und/oder die Materialien so ausgewählt sein, dass die gewünschte Reibung und damit die gewünschte Energieabsorption erreicht wird.

Die erste Gleitschiene 50 ist mit dem Mantelrohr 30 der Stelleinheit 3 bevorzugt mittels einer formschlüssigen, nicht lösbaren Verbindung verbunden. In dem gezeigten Ausführungsbeispiel sind in der Basis 500 die mittels Durchsetzfügen (z.B. Tox-Verfahren, Clinchen) entstandenen Verbindungsbereiche 506 gezeigt sind. Das Durchsetzfügen ermöglicht ein kostengünstiges und zuverlässiges Verbinden, bei welchem die Materialeigenschaften sowohl der ersten Gleitschiene 50 als auch des Mantelrohres 30 aufgrund der nicht vorhandenen Temperaturbeanspruchung im Wesentlichen unverändert bleiben. Hierdurch kann die Festigkeit des Gesamtsystems gegenüber der Verwendung einer stoffschlüssigen Verbindung durch Schweißen oder Löten weiter verbessert werden.

Die erste Gleitschiene 50 kann bevorzugt in Form eines gebogenen Blechteils vorgesehen sein, so dass ein Durchsetzfügen besonders einfach durchgeführt werden kann.

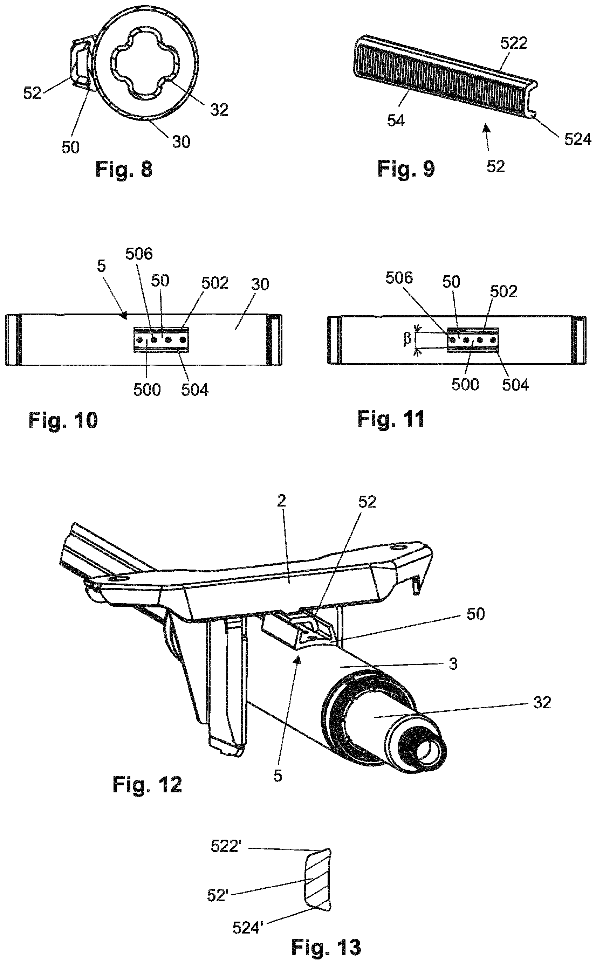

Die zweite Gleitschiene 52 kann ebenfalls als Blechformteil ausgebildet sein, oder kann als gesintertes Teil dargestellt werden. Fig. 13 veranschaulicht die bevorzugte Ausführungsform der Gleitschiene 52' im Falle der Darstellung als Sinterformteil. Die beiden Seitenwände 522' und 524' begrenzen ein Vollprofil, das im Querschnitt gesehen eine C-förmig Außenkontur aufweist.

Neben dem Absorbieren von Energie durch Reibung, wie oben bereits beschrieben, kann weiter bevorzugt zumindest eine der Gleitschienen 50, 52 in Schienenrichtung verjüngend oder erweiternd ausgebildet sein, um entsprechend auf die jeweils andere Gleitschiene 52, 50 eine Keilwirkung bei einer Verschiebung aufzubringen. Durch die Keilwirkung wird dann bei einer Verschiebung der Gleitschienen 50 ,52 gegeneinander entsprechend eine Verformung mindestens einer der beiden Gleitschienen 50, 52 hervorgerufen. Durch die auf diese Weise aufgebrachte über den Verschiebeweg kontinuierliche Verformung kann entsprechend auf kontrollierte Weise Crashenergie absorbiert werden.

Neben einer einfachen Aufweitung beziehungsweise Verjüngung mindestens einer der beiden Gleitschienen können auch beliebige andere Änderungen des Profils der Gleitschienen 50, 52 über die Erstreckung der Gleitschienen hinweg vorgenommen werden, um eine entsprechende Absorptionswirkung über den Verschiebeweg hinweg zu erreichen.

In dem in den Figuren 1 bis 9 gezeigten Ausführungsbeispiel ist hier die zweite Gleitschiene 52 so ausgebildet, dass sie sich entlang der Schienenrichtung in ihrem Querschnitt erweitert. Die zweite Gleitschiene 52 ist dabei so orientiert, dass sie sich in der Richtung aufweitet, in welcher eine Verschiebung der ersten Gleitschiene 50 bezüglich der zweiten Gleitschiene 52 im Crashfall stattfindet. Die Verbreiterung führt entsprechend auch zu einem Keilwinkel a, welcher besonders gut in Figur 7 zu erkennen ist. Der Querschnitt der zweiten Gleitschiene 52 verbreitert sich derart, dass bei einer Verschiebung der Stelleinheit 3 in Pfeilrichtung in Figur 7 gegenüber der an der nicht gezeigten Trageinheit 2 festgelegten zweiten Gleitschiene 52 die erste Gleitschiene 50 verformt wird, nämlich aufgeweitet wird. Durch diese Verformung der ersten Gleitschiene 50 bei einer Verschiebung relativ zur zweiten Gleitschiene 52 wird entsprechend Crashenergie absorbiert.

Die gezeigte Energieabsorptionseinrichtung 5 absorbiert entsprechend nicht nur Energie durch Reibung zwischen der ersten Gleitschiene 50 und der zweiten Gleitschiene 52, sondern auch durch eine Verformung der Gleitschienen 50, 52 bei einer Verschiebung derer gegeneinander. Wenn die zweite Gleitschiene 52 aus einem gesinterten Material besteht, findet die Verformung lediglich an der ersten Gleitschiene 50 statt. Sind beide Gleitschienen 50, 52 aus einem Blechmaterial hergestellt, so können sich auch beide Gleitschienen 50, 52 im Crashfall verformen. Über die Auswahl der Materialien kann der gewünschte Effekt eingestellt werden.

Auf diese Weise wird ein besonders einfaches und zuverlässiges Absorbieren von Crashenergie möglich, da lediglich zwei im Crashfall gegeneinander verschiebbare Gleitschienen 50, 52 vorgesehen sein müssen, welche als einfache Blechteile beziehungsweise Sinterteile hergestellt werden können. Weitere Bauteile, so wie sie im Stand der Technik gezeigt sind, sind zur Bereitstellung der Energieabsorptionsvorrichtung nicht notwendig.

Damit kann das Energieabsorptionsverhalten der Energieabsorptionseinrichtung 5 zuverlässig, stufenlos und fein über die Einstellung des Keilwinkels α eingestellt werden und damit auf einfache Weise an den jeweiligen Anwendungsfall angepasst werden.

In Figur 8 ist dieser Aufbau der beiden ineinander angeordneten Gleitschienen 50, 52 in einer schematischen Schnittdarstellung gezeigt. Figur 9 zeigt die zweite Gleitschiene 52 in einer perspektivischen schematischen Darstellung, aus welcher sich ebenfalls der sich über die Erstreckung der Gleitschiene 52 hinweg verändernde Querschnitt ergibt.

In Figur 10 ist eine Stelleinheit 3 mit einer ersten Gleitschiene 50 gezeigt, welche zwei Seitenwände 502, 504 sowie eine Basis 500 aufweist. Das Profil der ersten Gleitschiene 50 verändert sich über die Längserstreckung der Gleitschiene 50 nicht und es ist insbesondere auch kein Keilwinkel vorgesehen. Die Seitenwände 502, 504 dieser ersten Gleitschiene 50 können damit als Energieabsorptionsvorrichtung 5 durch Einsetzen einer entsprechenden zweiten Gleitschiene 52, so wie sie beispielsweise in Figur 9 gezeigt ist, im Crashfall aufgeweitet werden, so dass durch die entsprechende Umformenergie eine Energieabsorption erreicht wird, die über eine Energieabsorption durch reine Reibung hinausgeht.

Figur 11 zeigt in einem alternativen Ausführungsbeispiel eine erste Gleitschiene 50, welche an der Stelleinheit 3 festlegt ist und welche einen Keilwinkel β aufweist. Entsprechend kann in diese erste Gleitschiene 50 gemäß Figur 11 eine zweite Gleitschiene eingesetzt werden, welche entweder ebenfalls keilförmig ausgebildet ist, so wie beispielsweise die in Figur 9 gezeigte zweite Gleitschiene 52, oder aber eine Gleitschiene, welche parallele Seitenwände aufweist, welche dann in der in Figur 11 gezeigten zweiten Gleitschiene zusammengepresst werden. Auch hier findet eine Verformung der Seitenwände der Gleitschienen 50, 52 im Crashfall statt, so dass über die aufzuwendende Verformungsenergie entsprechend Energie absorbiert wird.

Keilwinkel α und/oder β im Bereich von 1° bis 5° sind entsprechend den Versuchsergebnissen zu bevorzugen.

Andere Veränderungen des Querschnitts, als die hier gezeigte lineare Veränderung des Querschnitts, sind ebenfalls denkbar. Beispielsweise kann eine progressive Erweiterung des Querschnitts vorgesehen sein, um ein progressives Ansteigen der Energieabsorption zum Ende des Verschiebeweges zu erreichen, um entsprechend am Ende des Verschiebeweges den Übergang zum Blockieren der Verschiebung weniger abrupt zu gestalten und entsprechend einen harmonischeren Übergang zu schaffen.

Figur 12 zeigt eine Lenksäule 1 in einer weiteren Ausführungsform, wobei hier die Stelleinheit 3 gegenüber der Trageinheit 2 im Normalbetrieb in ihrer Längsposition nicht verstellbar ist, sondern in einer festen Position angeordnet ist.

Über eine Energieabsorptionseinrichtung 5, welche wiederum eine auf in der oben bereits beschriebenen Weise ausgebildete ersten Gleitschiene 50, welche an der Stelleinheit 3 festgelegt ist, sowie eine zweite Gleitschiene 52, welche an der Trageinheit 2 festgelegt ist, umfasst, kann im Crashfall bei einer Verschiebung der Stelleinheit 3 gegenüber der Trageinheit 2 Crashenergie absorbiert werden.

Alternativ zu der Orientierung der beispielsweise in den Figuren 2 und 3 gezeigten Ausrichtung der ersten Gleitschiene 50 bezüglich der zweiten Gleitschiene 52 in einer bezüglich des C-Profils gegensinnigen Ausrichtung, können die erste Gleitschiene 50 und die zweite Gleitschiene 52 auch gleichsinnig ineinander eingelegt sein, derart, dass die offenen Enden der Seitenwände in die gleiche Richtung zeigen und sich entsprechend auch die Basen 500, 520 berühren.

Weiterhin ist es nicht notwendig, dass die zweite Gleitschiene 52 innerhalb der ersten Gleitschiene 50 läuft, sondern die Gleitschienen können auch umgekehrt angeordnet sein, nämlich derart, dass die zweite Gleitschiene 52 außerhalb der ersten Gleitschiene 50 läuft. Ein entsprechender vorteilhafter Hinterschnitt wäre dann entsprechend so ausgebildet, dass sich auch in diesem Fall die beiden Gleitschienen nicht voneinander lösen können, sondern nur in Schienenrichtung verschiebbar sein.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

## Patentansprüche

1. Lenksäule (1) für ein Kraftfahrzeug, umfassend eine mit dem Chassis des Kraftfahrzeugs verbindbare Trageinheit (2) und eine an dieser gehaltene Stelleinheit (3), welche eine Lenkspindel (32) lagert, die zum Einleiten einer Lenkbewegung von einem Lenkrad in ein Lenksystem zur Übertragung der Lenkbewegung auf ein lenkbares Rad dient, wobei die Stelleinheit (3) im Crashfall gegenüber der Trageinheit (2) verschiebbar ist, und wobei eine Energieabsorptionseinrichtung (5) zwischen der Trageinheit (2) und der Stelleinheit (3) angeordnet ist, um Energie im Crashfall über den Verschiebungsweg hinweg zu absorbieren, wobei die Energieabsorptionseinrichtung (5) eine an der Stelleinheit (3) festgelegte erste Gleitschiene (50) und eine an der Trageinheit (2) festgelegte zweite Gleitschiene (52) aufweist, welche aneinander geführt sind, **dadurch gekennzeichnet, dass** die erste Gleitschiene (50) einen C-förmigen Querschnitt aufweist und die zweite Gleitschiene (52) einen C-förmigen Querschnitt aufweist, und eine Gleitschiene (50, 52) in der anderen Gleitschiene (52, 50) geführt ist, wobei ein Kontakt zwischen den Gleitschienen (50, 52) dargestellt ist und welche im Crashfall zur Energieabsorption durch Reibung gegeneinander verschiebbar sind.

2. Lenksäule (1) gemäß Anspruch 1, **dadurch gekennzeichnet, dass** eine Gleitschiene (52) an der anderen Gleitschiene (50) formschlüssig und nur in Schienenrichtung verschiebbar gehalten ist, wobei mindestens eine Gleitschiene (50, 52) bevorzugt einen Hinterschnitt zum Halten der anderen Gleitschiene (50) aufweist.

3. Lenksäule (1) gemäß einem der vorstehenden Ansprüche, **dadurch gekennzeichnet, dass** mindestens eine Gleitschiene (50, 52) einen entlang der Gleitschiene (50, 52) veränderlichen Querschnitt aufweist, um bei einer Verschiebung der Gleitschienen (50, 52) gegeneinander eine Verformung mindestens einer der Gleitschienen (50, 52) zu bewirken.

4. Lenksäule (1) gemäß Anspruch 3, **dadurch gekennzeichnet, dass** mindestens eine Gleitschiene (50, 52) einen Keilwinkel (α, β) entlang der Gleitschiene (50, 52) aufweist.

5. Lenksäule (1) gemäß Anspruch 4, **dadurch gekennzeichnet, dass** beide Gleitschienen (50, 52) einen identischen Keilwinkel (α, β) aufweisen.

6. Lenksäule (1) gemäß einem der vorstehenden Ansprüche, **dadurch gekennzeichnet, dass** die erste Gleitschiene (50) und/oder die zweite Gleitschiene (52) als Blechformteil ausgebildet ist.

7. Lenksäule (1) gemäß einem der vorstehenden Ansprüche, **dadurch gekennzeichnet, dass** die Stelleinheit (3) gegenüber der Trageinheit (2) im Normalbetrieb in ihrer Position verstellbar ist.

8. Lenksäule (1) gemäß Anspruch 7, **dadurch gekennzeichnet, dass** die zweite Gleitschiene (52) über einen Spannmechanismus (4) an der Trageinheit (2) festlegbar ist, um in einem geöffneten Zustand des Spannmechanismus (4) eine Längsverstellung der Stelleinheit (3) gegenüber der Trageinheit (2) zu ermöglichen und in einer Verriegelungsposition des Spannmechanismus (4) eine Verschiebung der Stelleinheit (3) gegenüber der Trageinheit (2) im Normalbetrieb zu verhindern.

9. Lenksäule (1) gemäß einem der vorstehenden Ansprüche, **dadurch gekennzeichnet, dass** die erste Gleitschiene (50) am Mantelrohr (30) der Stelleinheit (3) nicht lösbar und formschlüssig verbunden ist, bevorzugt mittels Durchsetzfügen verbunden ist.

## Claims

1. Steering column (1) for a motor vehicle, comprising a supporting unit (2), which can be connected to the chassis of the motor vehicle, and an adjusting unit (3) which is held on said supporting unit and which supports a steering spindle (32) which serves for introducing a steering movement from a steering wheel into a steering system for transmitting the steering movement to a steerable wheel, wherein the adjusting unit (3) is displaceable with respect to the supporting unit (2) in the event of a crash, and wherein an energy absorption device (5) is arranged between the supporting unit (2) and the adjusting unit (3) in order to absorb energy over the displacement path in the event of a crash, wherein the energy absorption device (5) comprises a first sliding rail (50) fixed to the adjusting unit (3) and a second sliding rail (52) fixed to the supporting unit (2), which sliding rails are guided on one another, **characterized in that** the first sliding rail (50) comprises a C-shaped cross section and the second sliding rail (52) comprises a C-shaped cross section, and one sliding rail (50, 52) is guided in the other sliding rail (52, 50), wherein a contact is established between the sliding rails (50, 52), and which sliding rails are displaceable with respect to one another by friction to absorb energy in the event of a crash.

2. Steering column (1) according to Claim 1, **characterized in that** one sliding rail (52) is held positively on the other sliding rail (50) and so as to be displaceable only in the rail direction, wherein at least one sliding rail (50, 52) preferably comprises an undercut for holding the other sliding rail (50).

3. Steering column (1) according to one of the preceding claims, **characterized in that** at least one sliding rail (50, 52) comprises a cross section which is variable along the sliding rail (50, 52) in order to effect a deformation of at least one of the sliding rails (50, 52) during a displacement of the sliding rails (50, 52) with respect to one another.

4. Steering column (1) according to Claim 3, **characterized in that** at least one sliding rail (50, 52) comprises a wedge angle (α, β) along the sliding rail (50, 52).

5. Steering column (1) according to Claim 4, **characterized in that** both sliding rails (50, 52) comprise an identical wedge angle (α, β).

6. Steering column (1) according to one of the preceding claims, **characterized in that** the first sliding rail (50) and/or the second sliding rail (52) are/is formed as a shaped sheet metal part.

7. Steering column (1) according to one of the preceding claims, **characterized in that** the adjusting unit (3) is adjustable in its position with respect to the supporting unit (2) in normal operation.

8. Steering column (1) according to Claim 7, **characterized in that** the second sliding rail (52) can be fixed to the supporting unit (2) via a clamping mechanism (4) in order, in an opened state of the clamping mechanism (4), to allow a longitudinal adjustment of the adjusting unit (3) with respect to the supporting unit (2) and, in a locking position of the clamping mechanism (4), to prevent a displacement of the adjusting unit (3) with respect to the supporting unit (2) in normal operation.

9. Steering column (1) according to one of the preceding claims, **characterized in that** the first sliding rail (50) is non-releasably and positively connected to the casing tube (30) of the adjusting unit (3), preferably being connected by means of clinching.

## Revendications

1. Colonne de direction (1) pour véhicule automobile, comprenant une unité de support (2) qui peut être reliée au châssis du véhicule automobile et sur laquelle est soutenue une unité de réglage (3) qui monte une broche de direction (32) servant à introduire un déplacement de braquage d'un volant à un système de direction qui transfère le déplacement de braquage à une roue directrice,
l'unité de réglage (3) pouvant être déplacée par rapport à l'unité de support (2) en cas d'accident, un dispositif (5) d'absorption d'énergie étant disposé entre l'unité de support (2) et l'unité de réglage (3) pour, en cas d'accident, absorber l'énergie par l'intermédiaire du parcours de déplacement, le dispositif (5) d'absorption d'énergie présentant un premier rail de coulissement (50) fixé sur l'unité de réglage (3) et un deuxième rail de coulissement (52) fixé sur l'unité de support (2), les deux étant guidés l'un sur l'autre,
**caractérisée en ce que**
le premier rail de coulissement (50) présente une section transversale en forme de C et le deuxième rail de coulissement (52) une section transversale en forme de C,
**en ce qu'**un rail de coulissement (50, 52) est guidé dans l'autre rail de coulissement (52, 50),
**en ce qu'**un contact est établi entre les rails de coulissement (50, 52) qui peuvent coulisser l'un par rapport à l'autre en cas d'accident en vue d'absorber l'énergie par frottement.

2. Colonne de direction (1) selon la revendication 1, **caractérisée en ce qu'**un rail de coulissement (52) et l'autre rail de coulissement (50) sont maintenus à coulissement en correspondance géométrique et uniquement dans la direction des rails, au moins un rail de coulissement (50, 52) présentant de préférence une contre-dépouille qui permet de maintenir l'autre rail de coulissement (50).

3. Colonne de direction (1) selon l'une des revendications précédentes, **caractérisée en ce qu'**au moins un rail de coulissement (50, 52) présente une section transversale qui se modifie le long du rail de coulissement (50, 52) pour, en cas de coulissement des rails de coulissement (50, 52) l'un par rapport à l'autre, entraîner une déformation d'au moins l'un des rails de coulissement (50, 52).

4. Colonne de direction (1) selon la revendication 3, **caractérisée en ce qu'**au moins un rail de coulissement (50, 52) présente un angle de biseau (α, β) le long du rail de coulissement (50, 52).

5. Colonne de direction (1) selon la revendication 4, **caractérisée en ce que** les deux rails de coulissement (50, 52) présentent le même angle de biseau (α, β).

6. Colonne de direction (1) selon l'une des revendications précédentes, **caractérisée en ce que** le premier rail de coulissement (50) et/ou le deuxième rail de coulissement (52) sont configurés sous la forme de pièces en tôle façonnée.

7. Colonne de direction (1) selon l'une des revendications précédentes, **caractérisée en ce que** la position de l'unité de réglage (3) par rapport à l'unité de support (2) peut être ajustée en fonctionnement normal.

8. Colonne de direction (1) selon la revendication 7, **caractérisée en ce que** le deuxième rail de coulissement (52) peut être fixé sur l'unité de support (2) par un mécanisme de serrage (4) pour, lorsque le mécanisme de serrage (4) est en position ouverte, permettre un ajustement en longueur de l'unité de réglage (3) par rapport à l'unité de support (2) et, dans une position de verrouillage du mécanisme de serrage (4), empêcher un coulissement de l'unité de réglage (3) par rapport à l'unité de support (2) en fonctionnement normal.

9. Colonne de direction (1) selon l'une des revendications précédentes, **caractérisée en ce que** le premier rail de coulissement (50) est relié en correspondance géométrique et de manière non libérable au tube d'enveloppe (30) de l'unité de réglage (3), de préférence au moyen de joints traversants.
